(19) Europäisches Patentamt
European Patent Office
Office européen des brevets

(11) Numéro de publication: **0 127 500**
**B1**

# (12) FASCICULE DE BREVET EUROPÉEN

(45) Date de publication du fascicule du brevet: **02.09.87**

(51) Int. Cl.⁴: **G 01 P 15/13**, G 01 P 15/125

(21) Numéro de dépôt: **84400819.3**

(22) Date de dépôt: **20.04.84**

## (54) Accéléromètres à suspension électrostatique.

(30) Priorité: **21.04.83 FR 8306528**

(43) Date de publication de la demande:
**05.12.84 Bulletin 84/49**

(45) Mention de la délivrance du brevet:
**02.09.87 Bulletin 87/36**

(84) Etats contractants désignés:
**DE GB SE**

(56) Documents cité:
**DE-B-1 137 241**
**FR-A-2 124 055**
**FR-A-2 511 509**
**FR-E-89 697**
**GB-A-2 088 564**
**US-A-3 272 016**

(73) Titulaire: **OFFICE NATIONAL D'ETUDES ET DE RECHERCHES AEROSPATIALES(O.N.E.R.A.), 29, avenue de la Division Leclerc, F-92320 Chatillon (Hauts de Seine) (FR)**

(72) Inventeur: **Bernard, Alain, 2, allée des Renardeaux, F-94260 Fresnes (FR)**
Inventeur: **Foulon, Bernard, 25, avenue de Bretteville, F-92280 Neuilly (FR)**
Inventeur: **Le Clerc, Georges- Marie, 2, avenue d'Egly Ollainville, F-91290 Arpajon (FR)**

(74) Mandataire: **Cabinet Martinet, 62, rue des Mathurins, F-75008 Paris (FR)**

**EP 0 127 500 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention concerne les accéléromètres dans lesquels la mesure de l'accélération est déduite de celle des forces nécessaires pour maintenir ou ramener une masse d'épreuve dans une position définie par rapport au corps de l'appareil. Elle concerne plus particulièrement les accéléromètres où ces forces sont d'origine électrostatique.

On connaît pour la demande de brevet FR-A-2 511 509 du 31 Décembre 1980 un accéléromètre de ce type dans lequel la masse d'épreuve a une structure cruciforme et est formée de trois plaques rectangulaires planes dont les plans sont deux à deux orthogonaux.

La demande de brevet européen EP-A-0 118 359 (date de priorité: 28.02.83; publiée le 12.09.84 et appartenant à l'art antérieur selon les Art. 54 (3) et 89 CBE) décrit une masse d'épreuve comportant trois paires de plaques planes d'égale superficie, les plaques d'une paire étant deux à deux opposées et parallèles, les directions normales à ces plaques correspondant aux axes sensibles de l'accéléromètre triaxial. Dans cette demande de brevet, la forme type préconisée pour la masse d'épreuve est un cube.

Le brevet US-A-3 272 016 se réfère à un accéléromètre triaxial comprenant une masse d'épreuve qui a trois paires de plaques et quatre sections en forme de disque.

Le brevet DE-B-1 137 241 décrit un accéléromètre triaxial comprenant une masse d'épreuve en forme de cube.

La présente invention concerne essentiellement la forme de la masse d'épreuve et la définition des systèmes d'électrodes de suspension pour un accéléromètre électrostatique de navigation inertielle dont la masse d'épreuve doit présenter un rapport surface sur masse élevé.

Un objet de l'invention est de simplifier la réalisation de l'accéléromètre par la réduction du nombre de pièces utilisées et par la simplification des formes de celle-ci.

Un autre objet de l'invention est d'augmenter la rigidité de la masse d'épreuve sans en accroître la masse tout en conservant une surface importante et obtenir ainsi un meilleur découplage entre les modes propres de vibration de la masse d'épreuve et ceux de la suspension électrostatique.

Un autre objet de l'invention est d'utiliser des systèmes d'électrodes plans déposés (ce qui, outre la simplification de réalisation, permet un positionnement précis des électrodes par rapport à la masse d'épreuve).

Un autre objet de l'invention est de réduire la sensibilité thermique de l'accéléromètre grâce à l'usage de cales adaptées pour le positionnement des électrodes.

Conformément à l'invention, la masse d'épreuve est constituée par six plaques minces dont la longueur est le double de la largeur a. Ces six plaques sont assemblées de façon à former un cube d'arête a. Chacune des plaques dépasse de part et d'autre du cube central d'une longueur égale à a/2.

Les plaques peuvent être soit en matériaux métalliques légers (alliages d'aluminium, béryllium, magnésium, titane), soit en isolants métallisés en surface (silice, céramique). L'assemblage des plaques réalisé soit par collage, soit par soudure ou brasure peut être facilité par l'utilisation d'un cube creux découpé de façon à n'en conserver que les arêtes.

L'invention va être maintenant décrite en détail en se référant aux dessins annexés dans lesquels:

- la Fig. 1 représente la masse d'épreuve d'un accéléromètre de l'art antérieur;
- la Fig. 2 représente la masse d'épreuve de l'accéléromètre conforme à l'invention,
- la Fig. 3 représente une autre masse d'épreuve conforme à l'invention montée autour d'un noyau ayant la forme d'une ossature cubique;
- les Figs. 4a et 4b representent la masse d'épreuve et la cage de l'accéléromètre de l'invention;
- la Fig. 5 représente l'accéléromètre assemblé;
- la Fig. 6 représente une plaque d'électrode; et
- la Fig, 7 représente le diagramme électrique de l'accéléromètre.

En se référant à la Fig. 1, la masse d'épreuve de l'art antérieur comprend les trois plaques planes identiques 1, 2 et 3 assemblées de façon que les plans des plaques soient orthogonaux deux à deux.

La Fig. 2 représente la masse d'épreuve 10 de l'invention. Elle comprend non plus trois plaques mais six plaques 11 à 16, formant trois paires de plaques parallèles et'écartées l'une de l'autre dans chaque paire 11 et 12, 13 et 14, 15 et 16. Les plans des paires de plaques sont deux à deux orthogonaux. Les plaques assemblées forment un cube et les extrémités des plaques dépassent les faces de cube et forment des ailes 17. Chaque aile 17 a une longueur sensiblement égale à la moitié du côté a du cube.

Dans la Fig. 3, on retrouve les plaques 11-16 qui sont fixées à une ossature cubique 18 limitée aux arêtes d'un cube. Une masse d'épreuve 10 constituée par six plaques en AU4G (20 x 10 x 0,3 mm) et assemblée par soudure laser a une masse de 1 g; une masse d'épreuve 20 constituée de six plaques en silice (20 x 9,8 x 0,3 mm) assemblées par collage sur un cube évidé d'arête (1 x 1 x 10 mm) a une masse de 1,5 g.

L'asservissement des six degrés de liberté de la masse d'épreuve 10 ou 20 nécessite 12 électrodes réparties en 3 systèmes de 2 paires d'électrodes. Comme le montrent les Figs. 4a et 4b chaque système est composé de 2 plaques 21 et 22 portant chacune 2 électrodes 31 et 41 en ce qui concerne la plaque 21 et 32 et 42 en ce qui concerne la plaque 22 et de 2 entretoises 51 et 52 servant de cale d'épaisseur afin yde fixer les distances $d_1$ et $d_2$ entre électrodes et masse d'épreuve 10 ou 20.

Pour les dimensions des masses d'épreuve

précédemment indiquées, les dimensions des plaques porte-électrodes seraient (45 x 10 x 5 mm) et celles des cales d'épaisseur (11 x 10 x 7 mm). Ces cales d'épaisseur sont, soit dans le même matériau que la masse d'épreuve, soit dans un matériau possèdant un coefficient de dilatation identique.

Les trois systèmes d'électrodes:

I (31, 32, 41, 42), II (33, 34, 43, 44) et III (35, 36, 45, 46), s'emboîtent les uns dans les autres autour de la masse d'épreuve et sont positionnés perpendiculairement les uns par rapport aux autres au moyen d'une pièce support 19 (Fig. 5).

L'ensemble est placé à l'intérieur d'un boîtier étanche.

Les plaques portant les électrodes sont en matériau isolant (silice, ou alumine). Les différentes métallisations à réaliser correspondent:

- aux électrodes actives (31, 41 Fig. 6) qui servent à la fois à la détection capacitive de position et à l'application des forces électrostatiques de suspension;

à la surface 47 en regard de la masse suspendue, comprenant les butées mécaniques 48 qui empêchent la masse d'épreuve de venir en contact avec les électrodes. La surface conductrice 47 est portée au même potentiel que la masse d'épreuve et fait office d'écran afin d'éliminer les attractions électrostatiques parasites dues aux surfaces conductrices autres que les électrodes;

à toutes les autres surfaces 49, avec en particulier sur chaque plaque, la face opposée à celle des électrodes, Les surfaces 49 sont portées au potentiel de référence afin de minimiser les effets des capacités parasites sur les détections capacitives.

La réalisation des systèmes d'électrodes peut être effectuée de la façon suivante:

la métallisation est obtenue par dépôt sous vide. Les électrodes et les différents conducteurs sont ensuite délimités par des rainures usinées par ultra-sons dans la plaque isolante, des rainures diminuent la capacité parasite entre les électrodes 21, 31 et la surface métallisée 47 et évitent la présence de surfaces isolantes au voisinage immédiat de la masse d'épreuve, Les butées mécaniques de très faible épaisseur (une vingtaine de microns) sont obtenues par sérigraphie.

On va décrire en relation avec la Fig. 7 le fonctionnement de l'accéléromètre, étant entendu que le dispositif de la Fig. 7 n'est autre que celui de la Fig. 2 de la demande française FR-A-2 511 509 précitée seule ayant été modifiée la structure de la masse d'épreuve.

La Fig. 7 représente schématiquement le corps de l'accéléromètre et la masse d'épreuve 10. On y retrouve les plaques 11 et 12 et les électrodes 31, 32, 41, 42 coopérant avec lesdites plaques 11 et 12. Les électrodes 31, 41, 32, 42 sont portées respectivement aux potentiels $V_1$, $V_2$, $V_3$, $V_4$ par les circuits d'amplification 124 à travers les enroulements primaires des quatre transformateurs 131, 132, 133, 134. Une tension continue de polarisation $V_0$ est appliquée à la masse d'épreuve par le générateur 125 à travers le fil fin 126. Un générateur 127 permet d'appliquer à la masse d'épreuve, simultanément avec la polarisation $V_0$, une tension alternative $V_D$ afin de réaliser la détection de position.

Les signaux à la fréquence angulaire $\omega_D$ de la tension de détection de position recueillie par les électrodes 31, 32, 41, 42 à travers les condensateurs $C_1$, $C_2$, $C_3$, $C_4$ sont appliqués deux par deux, à travers les secondaires des transformateurs 131 - 134 à un amplificateur suivi d'un détecteur synchrone.

Le signal proportionnel à $(C_1-C_2)$, obtenu en sortie de l'amplificateur 128 est appliqué au détecteur synchrone 129 qui reçoit la porteuse à la fréquence angulaire $\omega_D$ du générateur 127. Le signal proportionnel à $(C_3-C_4)$, obtenu en sortie de l'amplificateur 138 est appliqué au détecteur synchrone 139 qui reçoit également la porteuse à la fréquence angulaire $\omega_D$ du générateur 127. Les amplificateurs 128 et 138 délivrent des signaux de sortie proportionnels à:

$$(C_1-C_2)V_D \text{ et } (C_3-C_4)V_D$$

Les signaux différentiels $S_{12}$ et $S_{34}$ fournis respectivement par les détecteurs synchrones 129 et 139 sont proportionnels à une combinaison linéaire de la translation de la masse d'épreuve selon un axe et de sa rotation autour d'un autre axe. En ce qui concerne cette rotation le coefficient de proportionnalité reliant le signal à l'angle de rotation n'est autre que la distance 2D joignant les centres de deux électrodes 31 et 41 ou 32 et 42. Ainsi qu'on le voit sur la Fig. 4a, cette distance peut excéder le côté a de l'ossature cubique car les électrodes peuvent se situer partiellement sur les ailes 17 des plaques. C'est là un avantage par rapport à la masse d'épreuve de la demande de brevet 83-03257 dans laquelle la masse d'épreuve étant cubique, la quantité 2D est en plus égale au côté a du cube.

L'additionneur soustracteur 130 sépare dans les signaux $S_{12}$ et $S_{34}$ la composante relative à la translation $S_z$ et la composante relative à la rotation $S_\psi$. Enfin les réseaux correcteurs 135 et 136 élaborent les signaux d'asservissement $V_1$ à $V_4$. Des détails sont donnés dans la demande de brevet français publiée FR-A-2 511 509 à laquelle on se reportera.

**Revendications**

1. Accéléromètre triaxial électrostatique comprenant une masse d'épreuve (10 ou 20) constituée de plaques planes rectangulaires d'égale superficie, mobile par rapport à un corps d'accéléromètre, reliée électriquement à ce corps par un fil très souple, des électrodes fixées audit corps et formant des capacités par rapport à la masse d'épreuve, des moyens de détecter la

position de la masse d'épreuve à l'aide des tensions de mesure appliquées sur lesdites électrodes et des moyens de positionner cette masse d'épreuve grâce à des forces électrostatiques développées à partir de tensions d'asservissement appliquées auxdites électrodes, caractérisé en ce que les plaques planes (11 - 16) de la masse d'épreuve sont assemblées régulièrement de façon à ce que le volume intérieur délimité par ces plaques soit un cube de côté inférieur à la longueur des plaques, cette masse d'épreuve comportant ainsi des éléments de surface plane deux à deux opposés et parallèles, formant trois paires d'éléments de surface disposés face auxdites électrodes, les trois directions normales à ces éléments de surface définissant les axes sensibles de l'accéléromètre, cette disposition permettant d'obtenir un rapport surface sur masse de la masse d'épreuve élevé nécessaire au fonctionnement de la suspension électrostatique.

2. Accéléromètre conforme à la revendication 1, caractérisé en ce que les plaques (11 - 16) sont fixées à une ossature cubique (18), lesdites plaques dépassant les faces du cube par leurs extrémités formant ailes (17).

3. Accéléromètre conforme à la revendication 2, caractérisé en ce que l'ossature dubique a une longueur d'arête a et que les plaques ont une longueur 2a et que les ailes ont par suite une partie dépassant l'ossature et de longueur a/2.

4. Accéléromètre conforme à la revendication 1, caractérisé en ce que les électrodes ont des surfaces égales et sont au nombre de douze réparties en trois groupes de deux paires, les électrodes d'un groupe étant perpendiculaires à l'axe sensible correspondant, les électrodes d'une paire étant coplanaires et faisant face aux électrodes de l'autre paire, chaque paire d'électrodes étant réalisée à partir de métallisations d'une plaque parallélépipédique isolante.

5. Accéléromètre conforme aux revendications 1 et 2, caractérisé en ce que les plaques portant les électrodes sont positionnées autour de la masse d'épreuve par des cales d'épaisseur (51, 52) présentant des coefficients de dilatation identiques à celui de la masse d'épreuve.

**Revendications**

1. Dreiachsiger elektrostatischer Beschleunigungsmessermit einer Testmasse (10 oder 20), welche von ebenen, rechtwickligen Platten gleicher Oberfläche gebildet ist, und bezüglich eines Beschleunigungskörpers beweglich ist, und mit dem Beschleunigungskörper mittels eines sehr flexiblen Drahtes elektrisch verbunedn ist, mit am Beschleunigungskörper befestigten Elektroden, die Kondensatoren bezüglich der Testmasse bilden, mit dem Mitteln zum Feststellen der Position der Testmasse mittels auf die Elektroden aufgegebenen Testspannungen, sowie mit Mitteln zum Positionieren der Testmasse aufgrund elektrostatischer Kräfte, welche von auf die Elektroden gegebenen Steuerspannungen ausgehen, dadurch gekennzeichnet, daß die ebenen Platten (11 bis 16) der Testmasse in der Weise regelmäßig angeordnet sind, daß der von den Platten begrenzte Innenraum ein Kubus ist, dessen Kante kleiner als die Länge der Platten ist, wobei die Testmasse paarweise gegenüberliegende und parallele Elemente mit ebener Oberfläche trägt, welche drei Paare von Elementen bilden, deren Oberflächen auf die Elektroden zuweisen und die drei senkrecht zu den Oberflächen der Elemente weisenden Richtungen die Empfindlichkeitsachsen des Beschleunigungsmessers definieren, wobei die Anordnung ein höheres, für die Funktion der elektrostatischen Aufhängung erforderliches Verhältnis von Oberfläche zur Masse der Testmasse zu erhalten gestattet.

2. Beschleunigungsmesser nach Anspruch 1, dadurch gekennzeichnet, daß die Platten (11 bis 16) an einem kubischen Gerüst (18) befestigt sind, und an ihren Enden über die Kubusflächen unter Bildung von Flügeln (17) vorstehen.

3. Beschleunigungsmesser nach Anspruch 2, dadurch gekennzeichnet, daß das kubische Gerüst einen Bremsweg a aufweist, die Platten eine Länge von 2a besitzen und die Flügel um eine Länge a/2 über das Gerüst vorstehen.

4. Beschleunigungsmesser nach Anspruch 1, dadurch gekennzeichnet, daß die Elektroden zwölf gleiche Oberflächen besitzen, welche in drei Gruppen zu je zwei Paaren verteilt sind, wobei die Elektroden einer Gruppe sich senkrecht zu der entsprechenden Empfindlichkeitsachse erstrecken, die Elektroden eines Paares koplanar sind und auf die Elektroden des anderen Paares zuweisen, wobei jedes Elektrodenpaar die Form eines metallischen Belages auf einer isolierenden Parallelepiped-Platte besitzt.

5. Beschleunigungsmesser nach Anspruch 1 und 2, dadurch gekennzeichnet, daß die die Elektroden tragenden Platten um die Testmasse durch Unterlegplatten (51, 52) um die Testmasse positioniert sind, welche Ausdehnungskoeffizienten haben, die mit demjenigen der Testmasse identisch sind.

**Claims**

1. Electrostatic accelerometer comprising a test weight (10 or 20) formed of rectangular plane plates of equal area, movable with respect to the accelerometer body, electrically connected to said body by a very flexible wire, electrodes bonded to said body and forming capacitors with respect to the test weight means for detecting voltages measuring the position of the test weight, said voltages being applied to said electrodes, and means for controlling the

position of the test weight through electrostatic forces developed from feedback voltages applied to said electrodes, characterized in that the plane plates (11 - 16) of the test weight are regularly arranged in order for the internal volume defined by these plates to be a cube having an edge smaller than the length of the plates, the test weight being formed with plane area elements two by two opposite and parallel, constituting three area element pairs arranged opposite said electrodes, the three directions normal to these area elements defining the sensitive axes of the accelerometer this arrangement allowing to obtain a high area to weight ratio of the test weight necessary for the electrostatic suspension to operate.

2. Accelerometer as set forth in claim 1 characterized in that the plates (11 - 16) are bonded to a cubic skeleton structure (18), said plates projecting beyond the faces of the cube by their end portions acting as wings (17).

3. Accelerometer as set forth in claim 2 characterized in that the cubic skeleton structure has an edge lenght a, the plate lenght is 2a and therefore the wings have a part projecting beyond the skeleton structure having a lenght a/2.

4. Accelerometer as set forth in claim 1 characterized in that the electrodes have equal areas and are twelve in number arranged in three sets of two pairs, the electrodes of a set being perpendicular to the corresponding sensitive axis, the electrodes of a pair being coplanar and opposite the electrodes of another pair, each electrode pair being made by metallization of an insulating parallelepipedic plate.

5. Accelerometer as set forth in claim 1 and 2, characterized in that the plates carrying the electrodes are positioned around the test weight by thickness wedges (51 - 52) having extension coefficient identical to that of the test weight.

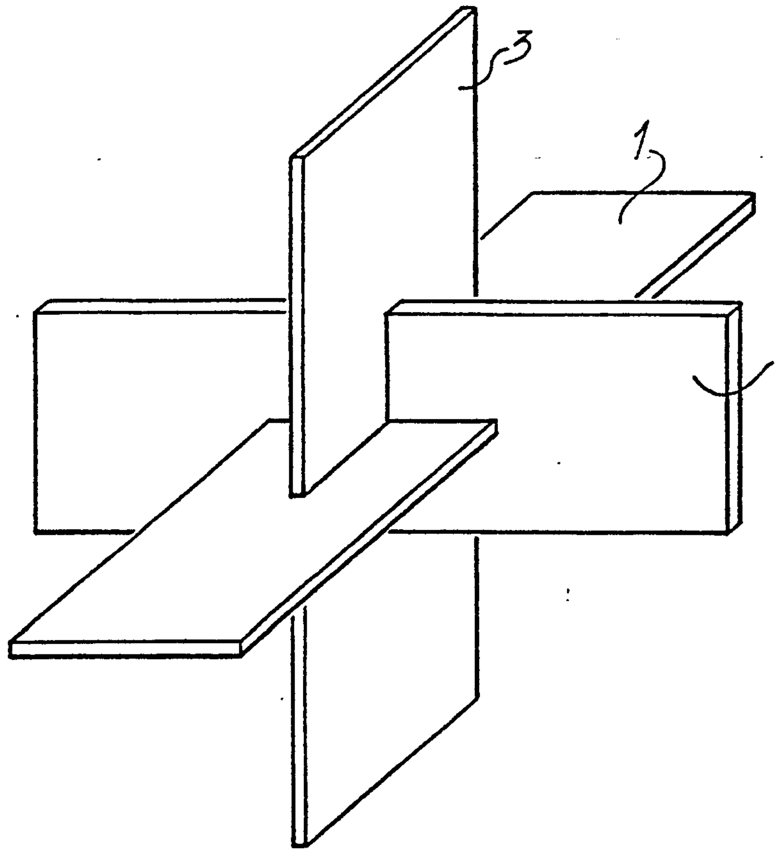


FIG.1
(Art antérieur)

FIG.2

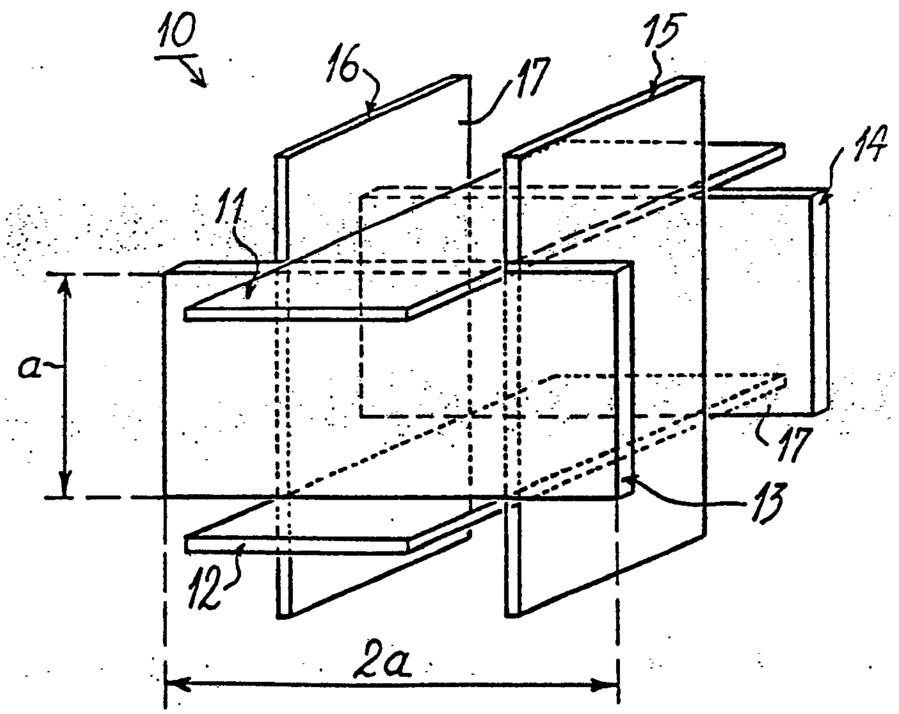

FIG.3

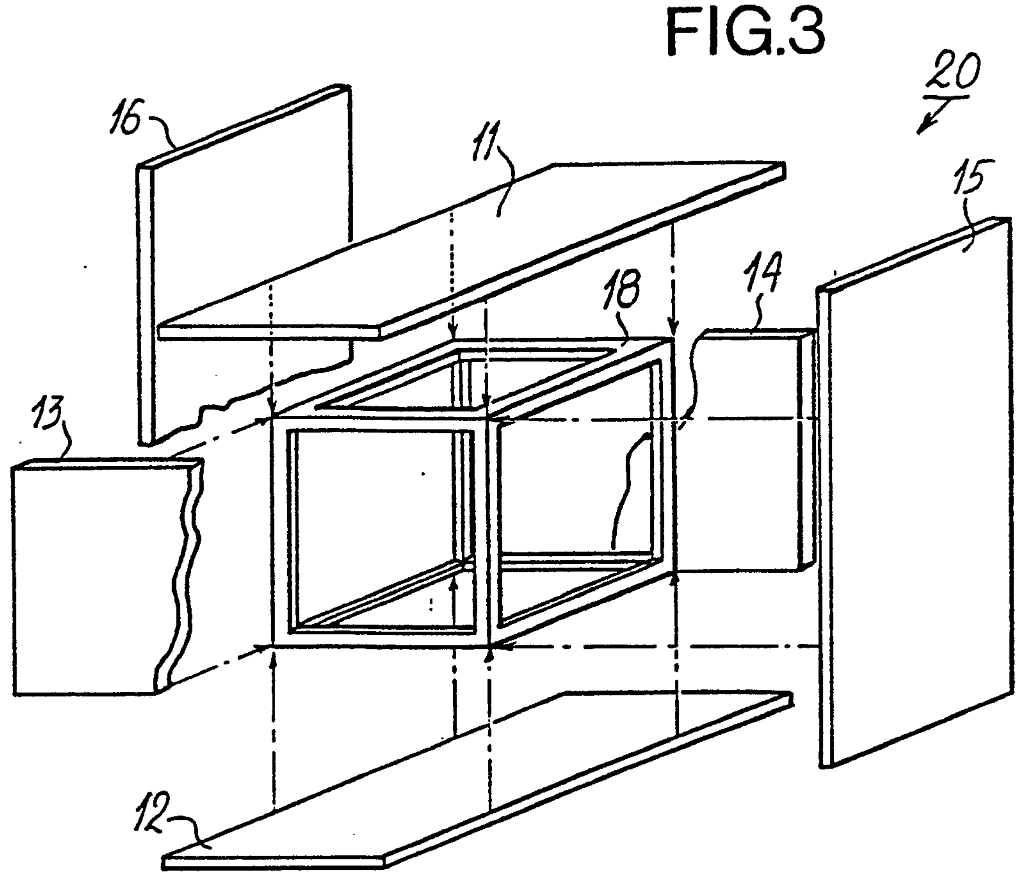
20
16
11
15
14
18
13
12

FIG.5

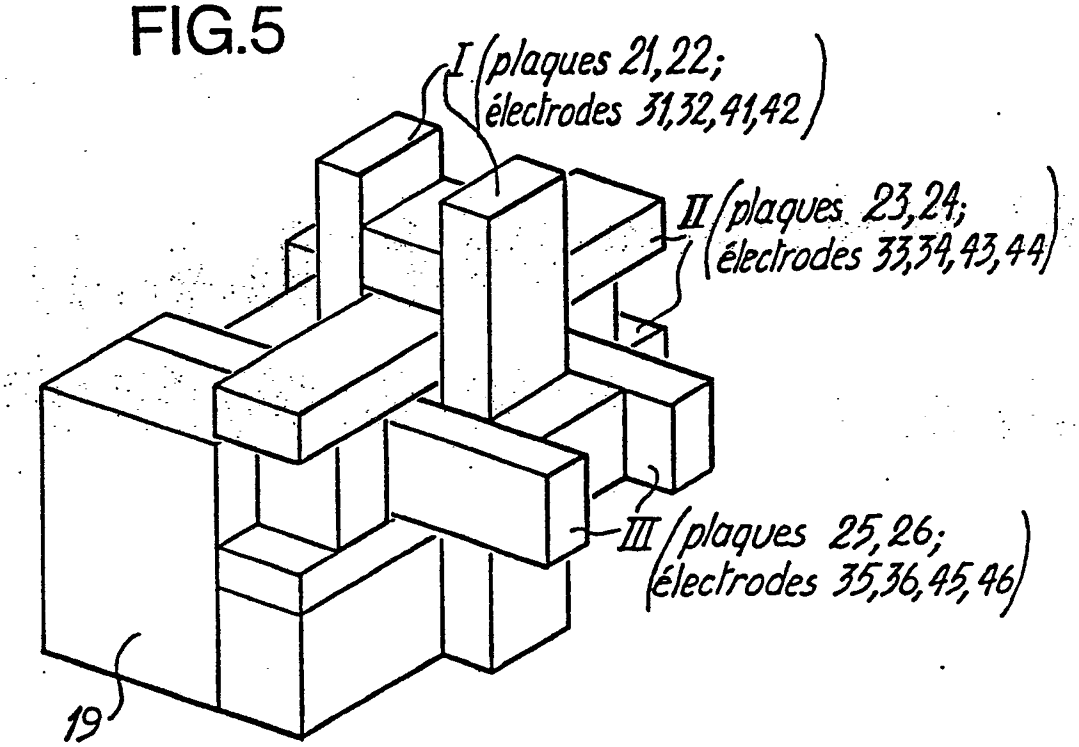
I (plaques 21,22;
électrodes 31,32,41,42)
II (plaques 23,24;
électrodes 33,34,43,44)
III (plaques 25,26;
électrodes 35,36,45,46)
19

FIG.4B

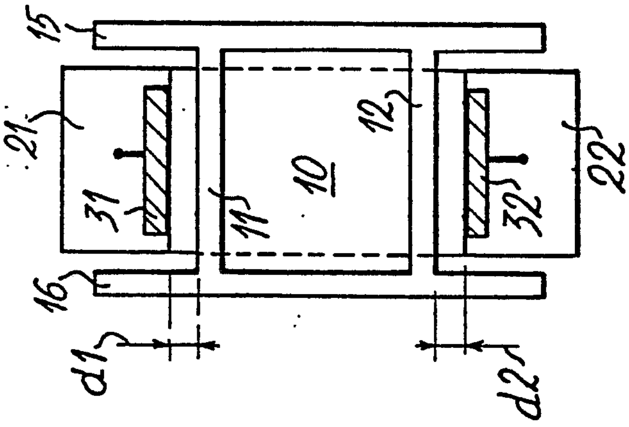
15
21
31
11
10
12
32
22
16
d1
d2

FIG.4A

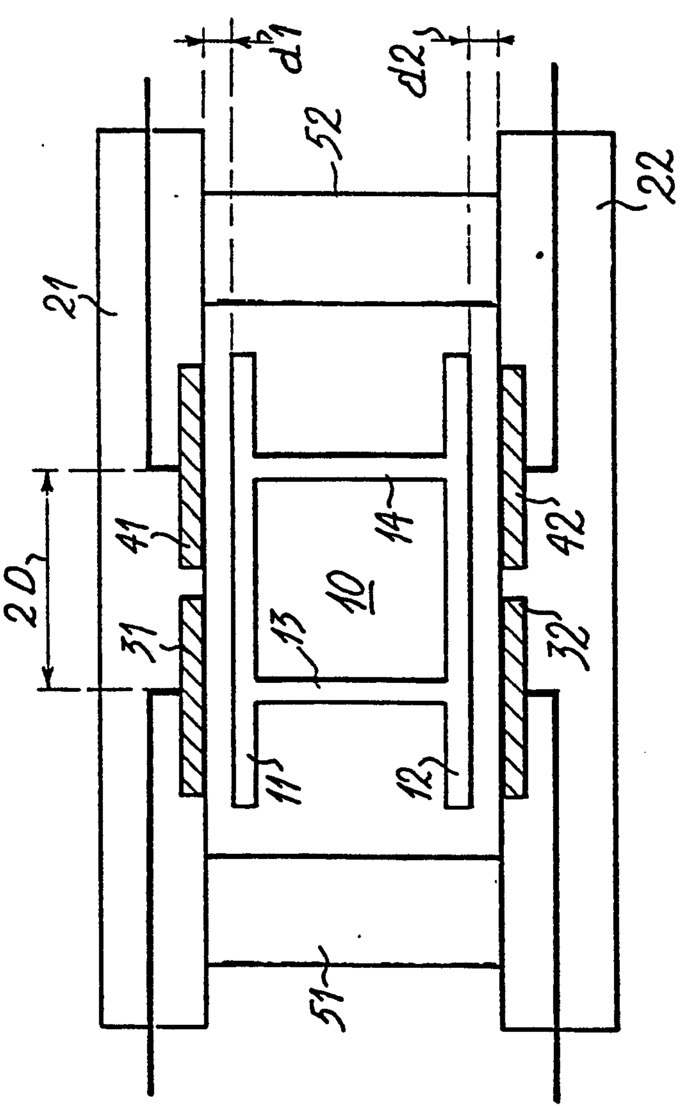
d1
d2
52
22
21
41
42
14
2D
10
31
13
32
11
12
51

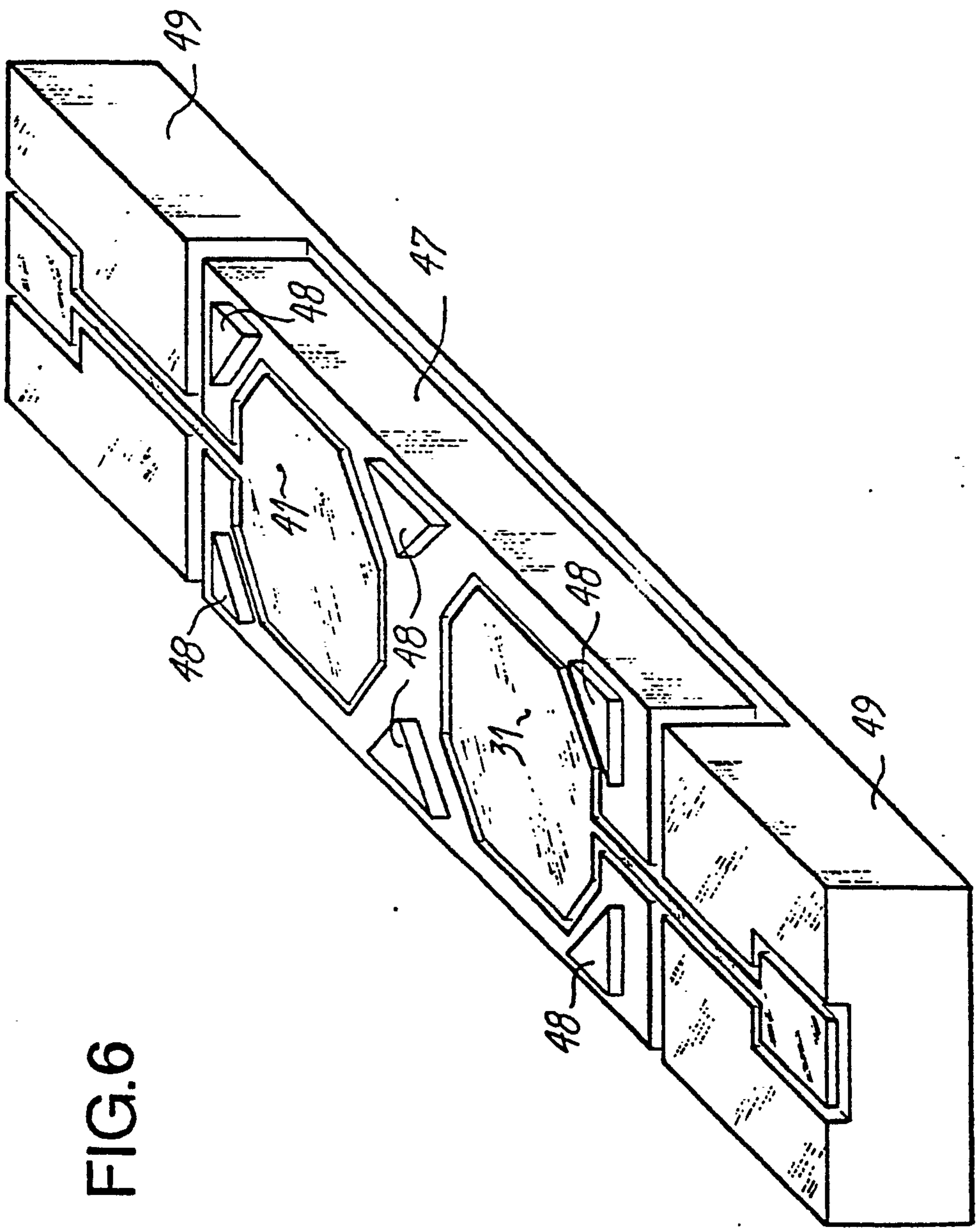


FIG.6

FIG. 7

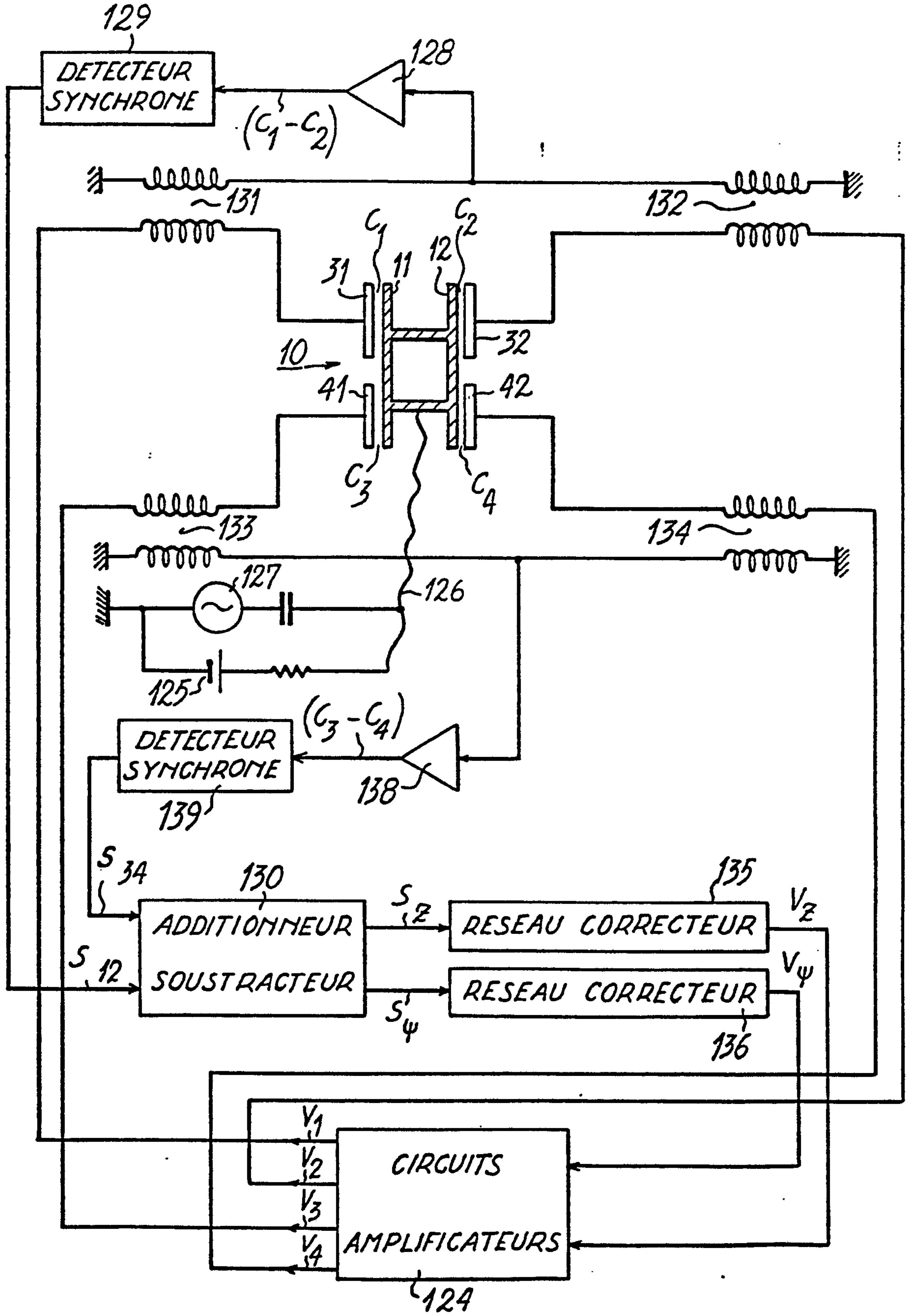
129
DETECTEUR SYNCHRONE
128
$(C_1-C_2)$
131
132
$C_1$
$C_2$
31
11
12
32
10
41
42
$C_3$
$C_4$
133
134
127
126
125
$(C_3-C_4)$
DETECTEUR SYNCHRONE
138
139
$S_{34}$
130
ADDITIONNEUR
SOUSTRACTEUR
$S_{12}$
$S_Z$
$S'_\psi$
135
RESEAU CORRECTEUR
RESEAU CORRECTEUR
136
$V_Z$
$V_\psi$
$V_1$
$V_2$
$V_3$
$V_4$
CIRCUITS
AMPLIFICATEURS
124